# EUROPEAN PATENT APPLICATION

(11) **EP 4 608 029 A1**
(43) Date of publication of application: **27.08.2025**
(21) Application number: 22962494.5
(22) Date of filing: 21.10.2022
(51) Int. Cl.: H04W 72/04, H04L 5/00

(54) **TRANSMISSION CONFIGURATION INDICATION STATE DETERMINATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/126844
(87) International publication number: WO 2024/082313

(57) **Abstract**

The present disclosure relates to a transmission configuration indication (TCI) state determination method, apparatus and device, and a storage medium. The method comprises: receiving first information, which is sent by a network device, and determining N TCI states on the basis of the first information (S11), wherein N is a positive integer; and receiving second information, which is sent by the network device, and determining M TCI states from among the N TCI states on the basis of the second information (S12), wherein M is a positive integer, M is less than or equal to N, and the M TCI states are used for indicating quasi co-location information for a terminal to receive a physical downlink control channel (PDCCH). Some TCI states are determined, by means of second information, from among a plurality of TCI states, which are indicated by first information, such that a TCI state that is used by a terminal in receiving a PDCCH and/or a DMRS of the PDCCH is determined in a multi-TRP condition, thereby improving the reception flexibility of the PDCCH and/or the DMRS of the PDCCH, which PDCCH and DMRS are based on a unified TCI state.

## Description

### TECHNICAL FIELD

The present disclosure relates to the field of communication technologies, and particularly to a method, an apparatus, and a device for determining a transmission configuration indication (TCI) state, and a storage medium.

### BACKGROUND

In a new radio (NR) network, especially in a case that a communication frequency band is in the frequency range 2, due to fast attenuation of the high-frequency channel, it is necessary to use beam-based transmission and reception to ensure the coverage,.

For a physical downlink control channel (PDCCH), a PDCCH demodulation reference signal (DMRS), a physical downlink shared channel (PDSCH), a PDSCH DMRS, an physical uplink control channel (PUCCH), a PUCCH DMRS, a physical uplink shared channel (PUSCH), a PUSCH DMRS, and/or a reference signal, etc., beams used for them are indicated independently. The reference signal may include a channel state information reference signal (CSI-RS), a sounding reference signal (SRS), a positioning reference signal (PRS), a tracking reference signal (TRS) and so on. For example, the CSI-RS may include a CSI-RS for channel state information measurement, a CSI-RS for beam measurement, or a CSI-RS for path loss estimation. The SRS may include an SRS for codebook-based or non-codebook-based channel state information measurement, an SRS for beam measurement, or an SRS for positioning measurement.

Generally, the PDCCH, the PDCCH DMRS, the PUCCH, and/or the PUCCH DMRS activate the corresponding beams respectively by a medium access control control element (MAC CE). The PDSCH, the PDSCH DMRS, the PUSCH, and/or the PUSCH DMRS indicate corresponding beams respectively by a downlink control information (DCI) signaling. The beam may be indicated by a transmission configuration indication (TCI) state or spatial relation info.

In some technologies, a unified TCI state is proposed to reduce signaling overhead. The TCI may be used to indicate a TCI state used by a user equipment (UE) to receive the PDCCH, the PDCCH DMRS, the PDSCH, and/or the PDSCH DMRS, or used to indicate a TCI state used by the UE to send the PUCCH, the PUCCH DMRS, the PUSCH, and/or the PUSCH DMRS.

However, only a unified TCI state for a single transmission and receiving point (TRP) is currently considered. That is, only one set of unified TCI states is considered. In a case that there is multi-TRP, how to indicate multiple sets of unified TCI states becomes an urgent problem to be solved.

### SUMMARY

To overcome the problem in related technologies, the present disclosure provides method, an apparatus, and a device for determining a transmission configuration indication (TCI) state, and a storage medium.

According to a first aspect of embodiments of the present disclosure, there is provided a method for determining a transmission configuration indication (TCI) state. The method is performed by a user equipment (UE), and includes: receiving first information sent by a network device, and determining N TCI states based on the first information, in which N is a positive integer; receiving second information sent by the network device, and determining M TCI states among the N TCI states based on the second information, in which M is a positive integer and M is less than or equal to N, and the M TCI states are used to indicate quasi-colocation information for the UE to receive a physical downlink control channel (PDCCH).

According to a second aspect of embodiments of the present disclosure, there is provided a method for determining a TCI state. The method is performed by a network device, and includes: sending first information to a UE, the first information being used by the UE to determine N TCI states, in which N is a positive integer; sending second information to the UE, the second information being used by the UE to determine M TCI states among the N TCI states, in which M is a positive integer and M is less than or equal to N, and the M TCI states are used to indicate quasi-colocation information for the UE to receive a PDCCH.

According to a third aspect of embodiments of the present disclosure, there is provided an apparatus for determining a TCI state. The apparatus is applied to in a UE, and includes: a receiving module, configured to receive first information sent by a network device; a determining module, configured to determine N TCI states based on the first information, in which N is a positive integer; the receiving module being also configured to receive second information sent by the network device; the determining module also configured to determine M TCI states among the N TCI states based on the second information, in which M is a positive integer and M is less than or equal to N, and the M TCI states are used to indicate quasi-colocation information for the UE to receive a PDCCH.

According to a fourth aspect of embodiments of the present disclosure, there is provided an apparatus for determining a TCI state. The apparatus is applied to in a network device, and includes: a sending module, configured to send first information to a UE, the first information being used by the UE to determine N TCI states, in which N is a positive integer; the sending module also configured to send second information to the UE, the second information being used by the UE to determine M TCI states among the N TCI states, in which M is a positive integer and M is less than or equal to N, and the M TCI states are used to indicate quasi-colocation information for the UE to receive a PDCCH.

According to a fifth aspect of embodiments of the present disclosure, there is provided a device for determining a TCI state, including: a processor; a memory for storing instructions executable by the processor; in which the processor is configured to perform any one of the methods described in the first aspect.

According to a sixth aspect of embodiments of the present disclosure, there is provided a device for determining a TCI state, including: a processor; a memory for storing instructions executable by the processor; in which the processor is configured to perform any one of the methods described in the second aspect.

According to a seventh aspect of embodiments of the present disclosure, there is provided a communication system. The system includes a UE and a network device, in which the UE is configured to perform any one of the methods described in the first aspect; the network device is configured to perform any one of the methods described in the second aspect.

According to an eighth aspect of embodiments of the present disclosure, there is provided a storage medium. The storage medium has stored instructions. When the instructions are executed by a processor of a UE, the UE is enabled to perform any one of the methods described in the first aspect.

According to a ninth aspect of embodiments of the present disclosure, there is provided a storage medium. The storage medium has stored instructions. When the instructions are executed by a processor of a network device, the network device is enabled to perform any one of the methods described in the second aspect.

The embodiments of the present disclosure provide technical solutions that can include the following beneficial effects: through the second information, the at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

It should be understood that the general description above and the detailed description below are illustrative and explanatory only and do not limit the present disclosure.

### BRIEF DESCRIPTION OF THE DRAWINGS

The accompanying drawings, which are incorporated in and constitute a part of this specification, illustrate embodiments consistent with the present disclosure and together with the description serve to explain the principles of the embodiments of the present disclosure.
FIG. 1 is a schematic diagram of a wireless communication system according to an exemplary embodiment.
FIG. 2 is a flowchart illustrating a method for determining a transmission configuration indication (TCI) state according to an exemplary embodiment.
FIG. 3 is a flowchart illustrating another method for determining a TCI state according to an exemplary embodiment.
FIG. 4 is a flowchart illustrating another method for determining a TCI state according to an exemplary embodiment.
FIG. 5 is a flowchart illustrating another method for determining a TCI state according to an exemplary embodiment.
FIG. 6 is a flowchart illustrating an apparatus for determining a TCI state according to an exemplary embodiment.
FIG. 7 is a flowchart illustrating another apparatus for determining a TCI state according to an exemplary embodiment.
FIG. 8 is a flowchart illustrating a device for determining a TCI state according to an exemplary embodiment.
FIG. 9 is a flowchart illustrating another device for determining a TCI state according to an exemplary embodiment.

### DETAILED DESCRIPTION

Exemplary embodiments will be illustrated in detail here, examples of which are shown in the accompanying drawings. Where the description below relates to the drawings, the same numbers in different drawings refer to the same or similar elements unless otherwise indicated. Implementations described in the following exemplary embodiments do not represent all implementations consistent with the present disclosure.

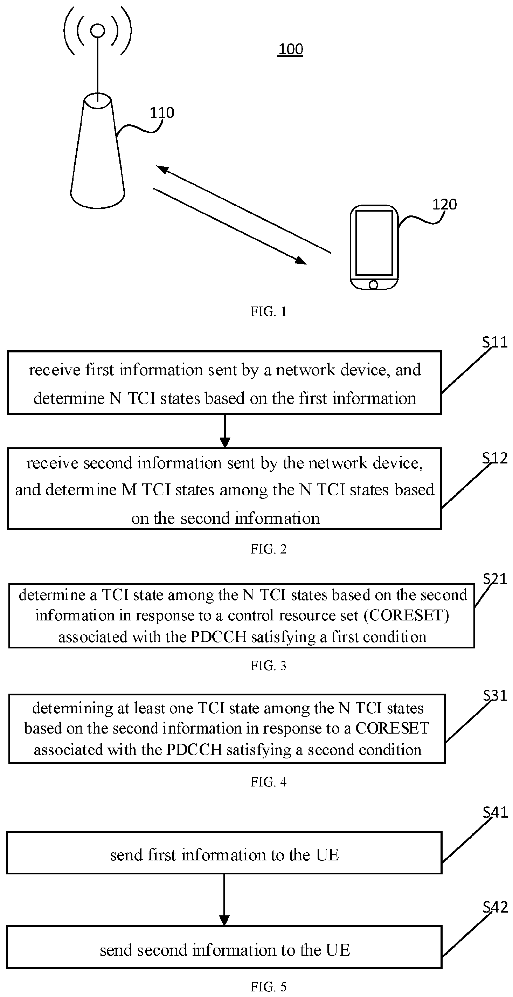

The communication method mentioned in the present disclosure is applicable to a wireless communication system 100 shown in FIG. 1. The network system may include a network device 110 and a user equipment (UE) 120. It can be understood that the wireless communication system shown in FIG. 1 is only a schematic illustration, and the wireless communication system may also include other network devices, such as a core network device, a wireless relay device and a wireless backhaul device, which are not drawn in FIG. 1. The embodiments of the present disclosure do not limit the number of network devices and UEs included in the wireless communication system.

It is further understood that the wireless communication system of the embodiments of the present disclosure is a network that provides a wireless communication function. The wireless communication system may use different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to different network capacities, rates, delays and other factors, the network may be divided into 2 generation (2G) network, 3G network, 4G network or future evolution network, such as the 5th generation wireless communication system (5G) network. The 5G network may also be called a New Radio (NR). For convenience of description, the wireless communication network is sometimes referred to simply as network in the present disclosure.

Further, the network device 110 involved in the present disclosure may also be referred as a wireless access network device. The wireless access network device may be: a base station, an evolved Node B (eNB), a house station, an access point (AP) in a wireless fidelity (WIFI) system, a wireless relay node, a wireless backhaul node, a transmission point (TP) or a transmission and receiving point (TRP), etc., may also be a gNB in the NR system, or may also be a component or part of the base station. In a case of vehicle to everything (V2X) communication system, the network device may also be an on-board device. It should be understood that in the embodiments of the present disclosure, the specific technology and the specific device form applied to the network device are not limited.

Further, the terminal 120 involved in the present disclosure may also be referred as a terminal equipment, a user equipment (UE), a mobile station (MS), a mobile terminal (MT), etc. It is a device that provides voice and/or data connectivity to a user. For example, the terminal may be a handheld device or an on-board etc. with wireless connectivity function. At present, some examples of the terminal are: a mobile phone, a pocket personal computer (PPC), a palmtop, a personal digital assistant (PDA), a laptop, a tablet, a wearable device, or an on-board device, etc. In addition, in a case that it is the V2X communication system, the terminal may also be an on-board device. It should be understood that in the embodiments of the present disclosure, the specific technology and the specific device form applied to the UE are not limited.

In the embodiments of the present disclosure, the network device 110 and the UE 120 may use any feasible wireless communication technology to realize data transmission between each other. A transmission channel through which the network device 110 sends data to the UE 120 is called downlink (DL), and a transmission channel through which the UE 120 sends data to the network device 110 is called uplink (UL). It is understood that the network device involved in the embodiments of the present disclosure may be a base station. Of course, the network device may also be any other possible network device, the UE may be any possible terminal, and the present disclosure is not limited.

In the NR, especially in a case that a communication frequency band is in frequency range 2, due to fast attenuation of the high-frequency channel, beam-based transmission and reception are needed to ensure the coverage.

In release (Rel) -16, beams used by a PDCCH, a PDCCH DMRS, a PDSCH, a PDSCH DMRS, a PUCCH, a PUCCH DMRS, a PUSCH, a PUSCH DMRS, and/or a reference signal are indicated independently. The reference signal may include CSI-RS, SRS, PRS, TRS and so on. For example, the CSI-RS may include a CSI-RS for channel state information measurement, a CSI-RS for beam measurement, or a CSI-RS for pathloss estimation. The SRS may include an SRS for codebook-based or non-codebook-based channel state information measurement, an SRS for beam measurement, or an SRS for positioning measurement.

Generally, the PDCCH, the PDCCH DMRS, the PUCCH, and/or the PUCCH DMRS activates a beam via an MAC CE respectively; and the PDSCH, the PDSCH DMRS, the PUSCH DMRS, and/or PUSCH DMRS respectively indicates a corresponding beam via a DCI signaling.

In order to reduce signaling overhead, Rel-17 adopts a unified TCI state. Currently, the unified TCI state may be a separate uplink and downlink indication, such as a DL TCI state and a UL TCI state. The unified TCI state may also be a joint uplink and downlink indication, such as a joint TCI state. For example, in a case that the network device indicates the DL TCI state for downlink, the DL TCI state may be used for the UE's PDSCH, PDSCH DMRS, PDCCH and/or PDCCH DMRS, and at least part of the CSI-RS. The at least part of the CSI-RS may be an aperiodic CSI-RS. For example, in a case that the network device indicates the UL TCI state for uplink, the UL TCI state may be used for the UE's PUSCH, PUSCH DMRS, PUCCH and/or PUCCH DMRS, and at least part of the SRS. For example, in a case that the network device indicates the joint TCI state, the joint TCI state may be used for both uplink and downlink channels and/or reference signals.

It is understood that the TCI may be used to indicate which receiving beam to be used by the UE when receiving the PDCCH, the PDCCH DMRS, the PDSCH, and/or the PDSCH DMRS. For example, the receiving beam is the same as a beam used by the UE for receiving a synchronization signal block (SSB) or CSI-RS sent by the network device. The TCI may also be used to indicate which sending beam to be used by the UE when sending the PUCCH, the PUCCH DMRS, the PUSCH, and/or the PUSCH DMRS. For example, the sending beam is the same as a beam used by the network device for sending the SSB or the CSI-RS. The beam refers to quasi-colocation (QCL) type-D.

The above mentioned beam may be indicated by a TCI state or spatial relation info. A TCI state corresponding to the PDCCH includes a TCI state corresponding to the PDCCH and/or the PDCCH DMRS, that is, the TCI state is used to receive the PDCCH and/or the PDCCH DMRS. Similarly, a TCI state corresponding to the PDSCH includes a TCI state corresponding to the PDSCH and/or the PDSCH DMRS, that is, the TCI state is used to receive the PDSCH and/or the PDSCH DMRS. A TCI state or spatial relation info corresponding to the PUCCH includes a TCI state or spatial relation info corresponding to the PUCCH and/or the PUCCH DMRS, that is, the TCI state or spatial relation info is used to send the PUCCH and/or the PUCCH DMRS. A TCI state or spatial relation info corresponding to the PUSCH includes the TCI state or spatial relation info corresponding to the PUSCH and/or the PUSCH DMRS, that is, the TCI state or spatial relation info is used to send the PUSCH and/or the PUSCH DMRS.

However, the current Rel-17 only considers the unified TCI state for a single-TRP. That is, only one set of unified TCI states is considered for beam indication. For example, this may include the UL TCI state, the DL TCI state, and/or the joint TCI state. In a case of multi-TRP, how to indicate multiple sets of unified TCI states becomes an urgent problem to be solved.

In the case of multi-TRP, this includes a method with a single DCI. Accordingly, for the PDCCH, PDCCH DMRS, PDSCH, PDSCH DMRS, PUCCH, PUCCH DMRS, PUSCH, and/or PUSCH DMRS, in a case that part of the channels and/or the DMRSs of the channels are configured with the multi-TRP, another part of the channels and/or the DMRSs of the channels are configured with the single-TRP, when the unified TCI state indicates multiple sets of TCI states, dynamic switching between the multi-TRP and the single-TRP may be required for the channels configured with the multi-TRP. Obviously, how to indicate the relationship between the PDCCHs and the multiple sets of unified TCI states has not yet been determined.

Therefore, the present disclosure provides a method, an apparatus, and a device for determining a TCI state, and a storage medium. Through the second information at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

FIG. 2 is a flowchart illustrating a method for determining a TCI state according to an exemplary embodiment. As shown in FIG. 2, the method is performed by a user equipment (UE) and may include the following steps.

At step S11, first information sent by a network device is received, and N TCI states are determined based on the first information.

In some embodiments, the UE may receive the first information sent by the network device. The UE may determine the N TCI states based on the received first information. It is understood that the first information may indicate the N TCI states, in which N is a positive integer.

In some embodiments, N is a positive integer greater than 1.

It is understood that each TCI state may correspond to one TRP.

At step S12, second information sent by the network device is received, and M TCI states are determined among the N TCI states based on the second information.

In some embodiments, the UE may also receive the second information sent by the network device. The UE determines the M TCI states from the N TCI states based on the received second information, in which M is a positive integer and M is less than or equal to N. The M TCI states are used to indicate quasi-colocation information for the UE to receive a PDCCH.

The quasi-colocation information may be, for example, QCL assumptions.

In some embodiments, the M TCI states may be used to indicate quasi-colocation information for the UE to receive a DMRS of the PDCCH.

In some embodiments, the M TCI states may be used to indicate quasi-colocation information for the UE to receive the PDCCH or the PDCCH DMRS.

It is understood that the M TCI states determined by the second information are the TCI states determined from the multiple TCI states indicated by the first information and used for the UE to carry out the reception of the PDCCH and/or the PDCCH DMRS.

In the present disclosure, through the second information, the at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

For the methods for determining a TCI state provided by the embodiments of the present disclosure, FIG. 3 is a flowchart illustrating another method for determining a TCI state according to an exemplary embodiment. As shown in FIG. 3, determining the M TCI states among the N TCI states based on the second information at S12 may include the following steps.

At step S21, a TCI state among the N TCI states is determined based on the second information, in response to a control resource set (CORESET) associated with the PDCCH satisfying a first condition.

In some embodiments, the UE may determine a TCI state from the N TCI states based on the second information in response to the CORESET associated with the PDCCH satisfying the first condition. It can be understood that the value of M for the M TCI states determined in the embodiments is 1.

In some embodiments, the first condition may be pre-defined or configured by the communication protocol.

It can be understood that in a case that the CORESET associated with the PDCCH satisfies the first condition, the UE does not expect the network device to configure multiple TCI states for the CORESET satisfying the first condition. For example, the multiple TCI states are two TCI states.

In the present disclosure, in a case that the CORESET satisfies the corresponding condition, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

For the methods for determining a TCI state provided by the embodiments of the present disclosure, the CORESET associated with the PDCCH satisfying the first condition may include at least one of: the CORESET associated with the PDCCH being CORESET#0; or the CORESET associated with the PDCCH being a CORESET group corresponding to CORESET#0.

In some embodiments, the CORESET associated with the PDCCH may be CORESET#0.

CORESET#0 may be considered as a special CORESET. CORESET#0 indicates that during a cell search process, the UE obtains its corresponding resource block from a PDCCH-config system information block (SIB) 1 and symbol numbers corresponding to a type 0-PDCCH common search space (CSS) set associated with the resource block.

In some embodiments, a first indication field may be configured in CORESET#0. For example, the first indication field is "followUnifiedTCIstate". The "followUnifiedTCIstate" may be used to indicate that the TCI state for PDCCH reception is indicated through the unified TCI state indication. The unified TCI state is a TCI state indicated by the first information. For example, the "followUnifiedTCIstate" is set as enabled.

In some embodiments, the CORESET associated with the PDCCH may be a CORESET group corresponding to CORESET#0.

For example, the UE may determine the CORESET group corresponding to the CORESET#0 based on other configuration information or a default rule.

In the present disclosure, in a case that the CORESET is CORESET#0 or the CORESET group corresponding to CORESET#0, the TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CORESET associated with the PDCCH satisfying the first condition may include at least one of: the CORESET associated with the PDCCH being a first CORESET, the first CORESET being any CORESET other than CORESET#0, and the first CORESET being associated with any CSS set other than a type 3-PDCCH CSS set; or the CORESET associated with the PDCCH being a CORESET group corresponding to the first CORESET.

In some embodiments, the CORESET associated with the PDCCH may be the first CORESET. The first CORESET is any CORESET other than CORESET#0. The first CORESET is associated with any CSS set other than the type 3-PDCCH CSS set.

In some embodiments, a second indication field may be configured in the first CORESET. For example, the second indication field may be "followUnifiedTCIstate". The "followUnifiedTCIstate" may be used to indicate that the TCI state for PDCCH reception is indicated through the unified TCI state indication. The unified TCI state is a TCI state indicated by the first information. For example, the "followUnifiedTCIstate" is set as enabled.

In some embodiments, the CORESET associated with the PDCCH is the CORESET group corresponding to the first CORESET.

For example, the UE may determine the CORESET group corresponding to the first CORESET based on other configuration information or a default rule.

In the present disclosure, in a case that the CORESET is any CORESET other than CORESET#0 or the CORESET group corresponding to any CORESET other than CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CSS set other than the type 3-PDCCH CSS set includes at least one of: a type0-PDCCH CSS set; a type0A-PDCCH CSS set; a type0B-PDCCH CSS set; a type1-PDCCH CSS set; a type1A-PDCCH CSS set; a type2-PDCCH CSS set; or a type2A-PDCCH CSS set.

In some embodiments, the CSS set other than the type 3-PDCCH CSS set may be a type0-PDCCH CSS set.

For example, the type0-PDCCH CSS set may be configured on a primary cell of a primary cell group (MCG). For example, it may be configured through pdcch-ConfigSIB1 in a master information block (MIB), search space SIB1 in pdcch-ConfigCommon or searchSpaceZero in pdcch-ConfigCommon for a DCI format 1_0, with a cyclic redundancy check (CRC) being scrambled by a system information-radio network temporary identity (SI-RNTI).

For another example, in a case that searchSpace multicast control channel (MCCH) and searchSpace multicast traffic channel (MTCH) are not provided, it may be configured through searchSpaceZero in pdcch-ConfigCommon for a DCI format 4_0, with a CRC being scrambled by a multicast control channel-radio network temporary identity (MCCH-RNTI) or a group-radio network temporary identity (G-RNTI).

In some embodiments, the CSS set other than the type 3-PDCCH CSS set may be a type0A-PDCCH CSS set.

For example, the type0A-PDCCH CSS set is configured by searchSpaceOtherSystemInformation in the pdcch-ConfigCommon for a DCI format 1_0, with a CRC being scrambled by a SI-RNTI on the primary cell in the MCG.

In some embodiments, the CSS set other than the type 3-PDCCH CSS set may be a type0B-PDCCH CSS set.

For example, the type0B-PDCCH CSS set is configured by searchSpaceMCCH and searchSpaceMCCH for a DCI format, with a CRC being scrambled by a MCCH-RNTI or a G-RNTI on the primary cell in the MCG.

In some embodiments, the CSS set other than the type 3-PDCCH CSS set may be a type1-PDCCH CSS set.

For example, the type1-PDCCH CSS set is configured by random access (ra) -SearchSpace in pdcch-ConfigCommon for a DCI format 1_0, with a CRC being scrambled by a ra-RNTI, a message (Msg) B-RNTI, or a temporary cell (TC) -RNTI on the primary cell in the MCG.

In some embodiments, the CSS set other than the type 3-PDCCH CSS set may be a type1A-PDCCH CSS set.

For example, the type1A-PDCCH CSS set is configured by sdt-SearchSpace in pdcch-ConfigCommon for a DCI format, with a CRC being scrambled by a cell (C) -RNTI or a configured scheduling (CS) -RNTI on the primary cell.

In some embodiments, the CSS set other than the type 3-PDCCH CSS set may be a type2-PDCCH CSS set.

For example, the type2-PDCCH CSS set is configured by pagingSearchSpace in pdcch-ConfigCommon for a DCI format 1_0, with a CRC being scrambled by paging (P) -RNTI on the primary cell in the MCG.

In some embodiments, the CSS set other than the type 3-PDCCH CSS set may be a type2A-PDCCH CSS set.

For example, the type2A-PDCCH CSS set is configured by peiSearchSpace in downlink (DL) ConfigCommonSIB for a DCI format 2_7, with a CRC being scrambled by a PEI-RNTI on the primary cell in the MCG.

The present disclosure provides a variety of different CSS sets other than the type 3-PDCCH CSS set. In a case that the CORESET is any other CORESET other than CORESET#0 or the CORESET group corresponding to any other CORESET other than CORESET#0, the TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

For the methods for determining a TCI states provided by the embodiments of the present disclosure, FIG. 4 is a flowchart illustrating another method for determining a TCI state according to an exemplary embodiment. As shown in FIG. 4, determining the M TCI states among the N TCI states based on the second information at S12 may include the following steps.

At step S31, at least one TCI state among the N TCI states is determined based on the second information, in response to a CORESET associated with the PDCCH satisfying a second condition.

In some embodiments, the UE may determine at least one TCI state from the N TCI states based on the second information in response to the CORESET associated with the PDCCH satisfying the second condition. It can be understood that the value of M for the M TCI states determined in the embodiments are 1 or greater than 1.

In some embodiments, the second condition may be pre-defined or configured by a communication protocol.

In the present disclosure, in a case that the CORESET satisfies the corresponding condition, at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CORESET associated with the PDCCH satisfying the second condition may include at least one of: the CORESET associated with the PDCCH being a second CORESET, the second CORESET being any CORESET other than CORESET#0, and the second CORESET being associated with a UE-specific search space (USS) set and/or a type3-PDCCH CSS set; or the CORESET associated with the PDCCH being a CORESET group corresponding to the second CORESET.

In some embodiments, the CORESET associated with PDCCH may be the second CORESET. The second CORESET is any CORESET other than CORESET#0, and the second CORESET is associated with the USS set and/or the type3-PDCCH CSS set.

For example, the type3-PDCCH CSS set is configured by SearchSpace in pdcch-Config, the searchSpaceType may be common for DCI formats, with a CRC being scrambled by an interruption (INT) -RNTI, a slot format indicator (SFI) -RNTI, a transmit power control (TPC) -PUSCH-RNTI, a TPC-PRCS-RNTI, or a cancellation indication (CI) -RNTI; or when applied only for a primary cell, the CRC being scrambled by a C-RNTI, a modulation coding scheme (MCS) -C-RNT1, a CS-RNTI, or a power saving (PS) -RNTI.

For another example, the type3-PDCCH CSS set is configured by SearchSpace in pdcch-ConfigMulticast for DCI formats, with a CRC being scrambled by a G-RNTI or a G-CS-RNTI.

For another example, the type3-PDCCH CSS set is configured by SearchSpaceMCCH and SearchSpaceMTCH on a secondary cell for a DCI format 4_0, with a CRC being scrambled by a MCCH-RNTI or a G-RNTI.

In the present disclosure, by the second CORESET associated with the USS set and/or the type3-PDCCH CSS set or by the CORESET group corresponding to the second CORESET, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the quasi-colocation information for PDCCH reception is determined based on multiple TCI state configurations in response to determining more than one TCI state among the N TCI states based on the second information.

In some embodiments, in response to determining more than one TCI state among the N TCI states based on the second information, that is, in a case that the value of M for the M TCI states determined is greater than 1, the quasi-colocation information for the reception of the PDCCH may be determined based on multiple TCI state configurations.

For example, the USS set and/or the type3-PDCCH CSS set is associated with the second CORESET, QCL assumptions for UE's reception may all be based on the determined at least one TCI state.

In the present disclosure, by determining the more than one TCI state from the multiple TCI states indicated by the first information, the quasi-colocation information of the USS set and/or the type3-PDCCH CSS set associated with the second CORESET is determined based on the multiple TCI state configurations, so as to receive the PDCCH and/or the PDCCH DMRS based on the quasi-colocation information.

In the method for determining a TCI state provided by the embodiments of the present disclosure, the first information is carried by a first medium access control control element (MAC CE), the first MAC CE is used to indicate the N TCI states, and the N TCI states correspond to a code point of a TCI field in downlink control information (DCI).

In some embodiments, the first information is carried by the first MAC CE. The first MAC CE is used to indicate the N TCI states, and the N TCI states correspond to the code point of the TCI field in the DCI.

It is understood that the TCI field may have multiple code points, and the first MAC CE may indicate the N TCI states. In the embodiments, the first MAC CE may indicate the N TCI states corresponding to one of the multiple code points. The N TCI states are the N TCI states determined by the first information.

For example, the TCI field may include 3 bits, and correspondingly 8 code points.

In the present disclosure, by indicating the N TCI states corresponding to one code point of the TCI field in the DCI through the MAC CE, it is realized that the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the first information is carried by a second MAC CE and a DCI, the second MAC CE is used to indicate TCI states respectively corresponding to a plurality of code points of a TCI field of the DCI, and the TCI field in the DCI is used to indicate one of the plurality of code points.

In some embodiments, the first information is carried by the second MAC CE and the DCI. The second MAC CE is used to indicate TCI states respectively corresponding to the plurality of code points of the TCI field of the DCI, and the TCI field in the DCI is used to indicate one of the plurality of code points.

It is understood that in the embodiments, the second MAC CE is used to indicate the multiple TCI states corresponding to the respective code points of the TCI field in the DCI. One code point is determined from the plurality of code points through the DCI in the first information. The N TCI states corresponding to the determined code point are used as the N TCI states determined by the first information.

In the present disclosure, using the MAC CE and the DCI to indicate the multiple TCI states corresponding to one code point of the TCI field in the DCI, it is realized that the at least one TCI state is determined from the multiple TCI states indicated by the first information, so that the TCI state used by the UE to receive the PDCCH and/or PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the N TCI states determined by the first information are used to determine QCL information for at least two of: the PDCCH, the PDCCH DMRS, the PDSCH, the PDSCH DMRS, the PUCCH, the PUCCH DMRS, the PUSCH, the PUSCH DMRS, the SRS, or the CSI-RS.

In some embodiments, the N TCI states determined by the first information may be used to determine the QCL assumptions for at least two of the PDCCH, the PDCCH DMRS, the PDSCH, the PDSCH DMRS, the PUCCH, the PUCCH DMRS, the PUSCH, the PUSCH DMRS, the SRS or the CSI-RS.

In the present disclosure, by the N TCI states determined by the first information, the quasi-colocation information of different channels, DMRSs, and reference signals can be determined, so that the different channels, DRMSs, and/or reference signals can be transmitted based on the quasi-colocation information.

In the method for determining a TCI state provided by the embodiments of the present disclosure, the second information is carried by a radio resource control (RRC) signaling and/or a third MAC CE.

In some embodiments, the second information may be the radio resource control (RRC) signaling.

In some embodiments, the second information may be the third MAC CE.

It is understood that the third MAC CE may be an MAC CE different from the first MAC CE and the second MAC CE.

In some embodiments, the second information may be the RRC signaling and the third MAC CE.

In the present disclosure, the second information is sent by the RRC signaling and/or the MAC CE, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the M TCI states are TCI states corresponding to a CORESET; or the M TCI states are TCI states corresponding to a CORESET group.

In some embodiments, the M TCI states are TCI states corresponding to a CORESET.

For example, the second information may determine M TCI states corresponding to each CORESET.

In some embodiments, the M TCI states are TCI states corresponding to a CORESET group.

For example, the second information may determine M TCI states corresponding to each CORESET group.

In some embodiments, the UE may determine a CORESET group corresponding to each CORESET based on other configuration information or a default rule.

In the present disclosure, by determining the M TCI states corresponding to different CORESETs or CORESET groups, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the TCI state may include at least one of: a joint TCI state, the joint TCI state being used to indicate an uplink TCI state and a downlink TCI state; or a downlink TCI state.

In some embodiments, the TCI state may be the joint TCI state, i.e., the indicated joint TCI state. The indicated joint TCI state may be used to indicate the uplink TCI state and downlink TCI state.

In some embodiments, the TCI state may be the downlink TCI state, i.e., the DL TCI state.

In some embodiments, the TCI state may be the indicated joint TCI state and/or the DL TCI state.

In the present disclosure, through indicating the TCI states used for the PDCCH by the different TCI states, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

Based on the same idea, the present disclosure also provides a method for determining a TCI state performed by a network device.

FIG. 5 is a flowchart illustrating a method for determining a TCI state according to an exemplary embodiment. As shown in FIG. 5, the method is performed by a network device and may include the following steps.

At step S41, first information is sent to a user equipment (UE).

In some embodiments, the network device may send the first information to the UE. The first information is used by the UE to determine N TCI states. It is understood that the first message may indicate N TCI states, in which N is a positive integer.

In some embodiments, N is a positive integer greater than 1.

It is understood that each TCI state may correspond to one TRP.

At step S42, second information is sent to the UE.

In some embodiments, the network device may also send the second information to the UE. The second information is used by the UE to determine M TCI states among the N TCI states, in which M is a positive integer and M is less than or equal to N. The M TCI states are used to indicate quasi-colocation information for the UE to receive a PDCCH.

The quasi-colocation information may, for example, be QCL assumptions.

In some embodiments, the M TCI states may be used to indicate quasi-colocation information for the UE to receive a DMRS.

In some embodiments, the M TCI states may be used to indicate quasi-colocation information for the UE to receive the PDCCH and quasi-colocation information for the UE to receive the DMRS.

It may be understood that the M TCI states determined by the second information are TCI states determined by the multiple TCI states indicated by the first information for the UE to receive the PDCCH and/or the PDCCH DMRS.

In the present disclosure, through the second information, the at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the second information is used by the UE to determine a TCI state among the N TCI states in response to a CORESET associated with the PDCCH satisfying a first condition.

In some embodiments, the network device may determine one TCI state from N TCI states based on the send second information in response to the CORESET associated with the PDCCH satisfying the first condition. It may be understood that the value of M for the M TCI states determined in the embodiments is 1.

In some embodiments, the first condition may be pre-defined or configured in a communication protocol.

In the present disclosure, in a case that the CORESET satisfies the corresponding condition, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CORESET associated with the PDCCH satisfying the first condition may include at least one of: the CORESET associated with PDCCH being CORESET#0; or the CORESET associated with the PDCCH being a CORESET group corresponding to CORESET#0.

In some embodiments, the CORESET associated with PDCCH may be CORESET#0.

CORESET#0 may be considered as a special CORESET. CORESET#0 indicates that during a cell search process, the UE obtains its corresponding resource block from a PDCCH-config SIB 1 and symbol numbers corresponding to a type 0-PDCCH CSS set associated with the resource block.

In some embodiments, a first indication field may be configured in CORESET#0. For example, the first indication field is "followUnifiedTCIstate". The "followUnifiedTCIstate" may be used to indicate that the TCI state for PDCCH reception is indicated through the unified TCI state indication. The unified TCI state is a TCI state indicated by the first information. For example, the "followUnifiedTCIstate" is set as enabled.

In some embodiments, the CORESET associated with PDCCH may be a CORESET group corresponding to CORESET#0.

For example, the UE may determine the CORESET group corresponding to the CORESET#0 based on other configuration information or a default rule.

In the present disclosure, in a case that the CORESET is CORESET#0 or the CORESET group corresponding to CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CORESET associated with the PDCCH satisfying the first condition may include at least one of: the CORESET associated with the PDCCH being a first CORESET, the first CORESET being any CORESET other than CORESET#0, and the first CORESET being associated with any CSS set other than a type 3-PDCCH CSS set; or the CORESET associated with the PDCCH being a CORESET group corresponding to the first CORESET.

In some embodiments, the CORESET associated with the PDCCH may be the first CORESET. The first CORESET is any CORESET other than CORESET#0. The first CORESET is associated with any CSS set other than the type 3-PDCCH CSS set.

In some embodiments, a second indication field may be configured in the first CORESET. For example, the second indication field may be "followUnifiedTCIstate". The "followUnifiedTCIstate" may be used to indicate that the TCI state for PDCCH reception is indicated through the unified TCI state indication. The unified TCI state is a TCI state indicated by the first information. For example, the "followUnifiedTCIstate" is set as enabled.

In some embodiments, the CORESET associated with the PDCCH is the CORESET group corresponding to the first CORESET.

For example, the UE may determine the CORESET group corresponding to the first CORESET based on other configuration information or a default rule.

In the present disclosure, in a case that the CORESET is any CORESET other than CORESET#0 or the CORESET group corresponding to any CORESET other than CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CSS set other than the type 3-PDCCH CSS set includes at least one of: a type0-PDCCH CSS set; a type0A-PDCCH CSS set; a type0B-PDCCH CSS set; a type1-PDCCH CSS set; a type1A-PDCCH CSS set; a type2-PDCCH CSS set; or a type2A-PDCCH CSS set.

In some embodiments, the CSS set other than the type 3-PDCCH CSS set may be a type0-PDCCH CSS set.

For example, the type0-PDCCH CSS set may be configured on a primary cell of a MCG. For example, it may be configured through pdcch-ConfigSIB1 in a MIB, search space SIB1 in pdcch-ConfigCommon or searchSpaceZero in pdcch-ConfigCommon for a DCI format 1_0, with a CRC being scrambled by a SI-RNTI.

For another example, in a case that searchSpaceMCCH and searchSpaceMTCH are not provided, it may be configured through searchSpaceZero in pdcch-ConfigCommon for a DCI format 4_0, with a CRC being scrambled by a MCCH-RNTI or a G-RNTI.

In some embodiments, the CSS set other than the type 3-PDCCH CSS set may be a type0A-PDCCH CSS set.

For example, the type0A-PDCCH CSS set is configured by searchSpaceOtherSystemInformation in the pdcch-ConfigCommon for the DCI format 1_0, with a CRC being scrambled by a SI-RNTI on the primary cell in the MCG.

In some embodiments, the CSS set other than the type 3-PDCCH CSS set may be a type0B-PDCCH CSS set.

For example, the type0B-PDCCH CSS set is configured by searchSpaceMCCH and searchSpaceMCCH for a DCI format, with a CRC being scrambled by a MCCH-RNTI or a G-RNTI on the primary cell in the MCG.

In some embodiments, the CSS set other than the type 3-PDCCH CSS set may be a type1-PDCCH CSS set.

For example, the type1-PDCCH CSS set is configured by ra-SearchSpace in pdcch-ConfigCommon for a DCI format 1_0, with a CRC being scrambled by a ra-RNTI, a MsgB-RNTI, or a TC-RNTI on the primary cell in the MCG.

In some embodiments, the CSS set other than the type 3-PDCCH CSS set may be a type1A-PDCCH CSS set.

For example, the type1A-PDCCH CSS set is configured by sdt SearchSpace in pdcch-ConfigCommon for DCI format. CRC is scrambled by C-RNTI or CS-RNTI on the primary cell.

In some embodiments, any CSS set other than the type 3-PDCCH CSS set may be type2-PDCCH CSS set.

For example, the type2-PDCCH CSS set is configured by pagingSearchSpace in pdcch-ConfigCommon for a DCI format 1_0, with a CRC being scrambled by P-RNTI on the primary cell in the MCG.

In some embodiments, the CSS set other than the type 3-PDCCH CSS set may be a type2A-PDCCH CSS set.

For example, the type2A-PDCCH CSS set is configured by peiSearchSpace in downlinkConfigCommonSIB for a DCI format 2_7, with a CRC being scrambled by a PEI-RNTI on the primary cell in the MCG.

The present disclosure provides a variety of different CSS sets other than the type 3-PDCCH CSS set. In a case that the CORESET is any other CORESET other than CORESET#0 or the CORESET group corresponding to any other CORESET other than CORESET#0, the TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the second information is used by the UE to determine at least one TCI state among the N TCI states, in response to a CORESET associated with the PDCCH satisfying a second condition.

In some embodiments, the network device may determine the second information being used by the UE to determine at least one TCI state from the N TCI states, in response to the CORESET associated with the PDCCH satisfying the second condition. It can be understood that the value of M for M TCI states in this embodiment is 1 or greater than 1.

In some embodiments, the second condition may be pre-defined or configured by a communication protocol.

In the present disclosure, in a case that the CORESET satisfies the corresponding condition, at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the CORESET associated with the PDCCH satisfying the second condition may include at least one of: the CORESET associated with the PDCCH being a second CORESET, the second CORESET being any CORESET other than CORESET#0, and the second CORESET being associated with a USS set and/or a type3-PDCCH CSS set; or the CORESET associated with the PDCCH being a CORESET group corresponding to the second CORESET.

In some embodiments, the CORESET associated with PDCCH may be the second CORESET. The second CORESET is any CORESET other than CORESET#0, and the second CORESET is associated with the USS set and/or the type3-PDCCH CSS set.

For example, the type3-PDCCH CSS set is configured by SearchSpace in pdcch-Config, and searchSpaceType may be common for DCI formats, with a CRC being scrambled by an INT-RNTI, a SFI-RNTI, a TPC-PUSCH-RNTI, a TPC-PRCS-RNTI, or a CI-RNTI; or when applied only for a primary cell, the CRC being scrambled by a C-RNTI, a MCS-C-RNT1, a CS-RNTI, or a PS-RNTI.

For another example, the type3-PDCCH CSS set is configured by SearchSpace in pdcch-ConfigMulticast for DCI formats, with a CRC being scrambled by a G-RNTI or a G-CS-RNTI.

For another example, the type3-PDCCH CSS set is configured by SearchSpaceMCCH and SearchSpaceMTCH on a secondary cell for a DCI format 4_0, with a CRC being scrambled by a MCCH-RNTI or a G-RNTI.

In the present disclosure, by the second CORESET associated with the USS set and/or the type3-PDCCH CSS set or the CORESET group corresponding to the second CORESET, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the quasi-colocation information for PDCCH reception is determined based on multiple TCI state configurations in response to the second information being used by the UE to determine more than one TCI state among the N TCI states.

In some embodiments, in response to the second information being used by the UE to determine more than one TCI state among the N TCI states, that is, in a case that the value of M for the M TCI states determined by the UE based on the second information is greater than 1, the quasi-colocation information for the reception of the PDCCH may be determined based on multiple TCI state configurations.

For example, the USS set and/or the type3-PDCCH CSS set is associated with the second CORESET, QCL assumptions for UE's reception may all be based on the determined at least one TCI state.

In the present disclosure, by determining the at least one TCI state from the multiple TCI states indicated by the first information, the quasi-colocation information of the USS set and/or the type3-PDCCH CSS set associated with the second CORESET is determined based on the multiple TCI state configurations, so as to receive PDCCH and/or PDCCH DMRS based on the quasi-colocation information.

In the method for determining a TCI state provided by the embodiments of the present disclosure, the first information includes a MAC CE, in which the MAC CE is used to indicate the N TCI states, and the N TCI states correspond to a code point of a TCI field in downlink control information (DCI).

In some embodiments, the first information is carried by the first MAC CE. The first MAC CE is used to indicate the N TCI states, and the N TCI states correspond to the code point of the TCI field in the DCI.

It is understood that the TCI field may have multiple code points, and the first MAC CE may indicate the N TCI states. In the embodiments, the first MAC CE may indicate the N TCI states corresponding to one of the multiple code points. The N TCI states are the N TCI states determined by the first information.

For example, the TCI field may include 3 bits, and correspondingly 8 code points.

In the present disclosure, by indicating the N TCI states corresponding to one code point of the TCI field in the DCI through the MAC CE, it is realized that the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the first information is carried by a second MAC CE and a DCI, the second MAC CE is used to indicate TCI states respectively corresponding to a plurality of code points of a TCI field of the DCI, and the TCI field in the DCI is used to indicate one of the plurality of code points.

In some embodiments, the first information may be carried by the second MAC CE and the DCI. The second MAC CE may be used to indicate N TCI states corresponding to the respective code points of the TCI field of the DCI. It is understood that the number of N TCI states corresponding to each code point may be the same or different. The TCI field in the DCI of the first information is used to indicate one of the plurality of code points.

It is understood that in the embodiments, the second MAC CE is used to indicate more than one TCI state corresponding to the respective code points of the TCI field in the DCI. One code point is determined from the plurality of code points through the DCI in the first information. The N TCI states corresponding to the determined code point are used as the N TCI states determined by the first information.

In the present disclosure, using the MAC CE and the DCI to indicate the multiple TCI states corresponding to one code point of the TCI field in the DCI, it is realized that the at least one TCI state is determined from the multiple TCI states indicated by the first information, so that the TCI state used by the UE to receive the PDCCH and/or PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the N TCI states determined by the first information are used to determine QCL information for at least two of: the PDCCH, the PDCCH DMRS, the PDSCH, the PDSCH DMRS, the PUCCH, the PUCCH DMRS, the PUSCH, the PUSCH DMRS, the SRS, or the CSI-RS.

In some embodiments, the N TCI states determined by the first information may be used to determine the QCL assumptions for at least two of the PDCCH, the PDCCH DMRS, the PDSCH, the PDSCH DMRS, the PUCCH, the PUCCH DMRS, the PUSCH, the PUSCH DMRS, the SRS or the CSI-RS.

In the present disclosure, by the N TCI states determined by the first information, the quasi-colocation information of different channels, DMRS, and reference signals can be determined, so that the different channels, DRMS, and/or reference signals can be transmitted based on the quasi-colocation information.

In the method for determining a TCI state provided by the embodiments of the present disclosure, the second information is carried by an RRC signaling and/or a third MAC CE.

In some embodiments, the second information may be the RRC signaling.

In some embodiments, the second information may be the third MAC CE.

It is understood that the third MAC CE may be an MAC CE different from the first MAC CE and the second MAC CE.

In some embodiments, the second information may be the RRC signaling and the third MAC CE.

In the present disclosure, the second information is sent by the RRC signaling and/or the MAC CE, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the M TCI states are TCI states corresponding to a CORESET; or the M TCI states are TCI states corresponding to a CORESET group.

In some embodiments, the M TCI states are TCI states corresponding to a CORESET.

For example, the second information may determine M TCI states corresponding to each CORESET.

In some embodiments, the M TCI states are TCI states corresponding to a CORESET group.

For example, the second information may determine M TCI states corresponding to each CORESET group.

In some embodiments, the UE may determine a CORESET group corresponding to each CORESET based on other configuration information or a default rule.

In the present disclosure, by determining the M TCI states corresponding to different CORESETs or CORESET groups, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

In the method for determining a TCI state provided by the embodiments of the present disclosure, the TCI state may include at least one of: a joint TCI state, the joint TCI state being used to indicate an uplink TCI state and a downlink TCI state; or a downlink TCI state.

In some embodiments, the TCI state may be the joint TCI state, i.e., the indicated joint TCI state. The indicated joint TCI state may be used to indicate the uplink TCI state and downlink TCI state.

In some embodiments, the TCI state may be the downlink TCI state, i.e., the DL TCI state.

In some embodiments, the TCI state may be the indicated joint TCI state and/or the DL TCI state.

In the present disclosure, through indicating the TCI states used for the PDCCH by the different TCI states, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

It is understood that the specific implementations of each embodiment for the network device can refer to the embodiments for the UE, which will not be repeated in the present disclosure.

It should be noted that persons skilled in the art may understand that the various embodiments mentioned above in this present disclosure may be used in conjunction with the above-mentioned embodiments or may be used independently. Whether used alone or in conjunction with the aforementioned embodiments, the implementation principle is similar. Some embodiments of the present disclosure are illustrated by embodiments used together. Of course, those skilled in the art may understand that such examples are not a qualification of the embodiments of the present disclosure.

Based on the same idea, the embodiments of the present disclosure also provide an apparatus and a device for determining a TCI state.

It is understood that, in order to achieve the above functions, the apparatus and the device for determining a TCI state provided by the embodiments of the present disclosure contain the corresponding hardware architectures and/or software modules that perform respective functions. In combination with the units and algorithmic steps of each example disclosed in the embodiments of the present disclosure, the embodiments of the present disclosure may be implemented in hardware or in a combination of hardware and computer software. Whether a function is performed in hardware or computer software driving hardware depends on the specific application and design constraints of the technical solution. A person skilled in the art may use a different method for each particular application to achieve the described function, but such implementation should not be considered to be outside the scope of the technical scheme of the embodiments of the present disclosure.

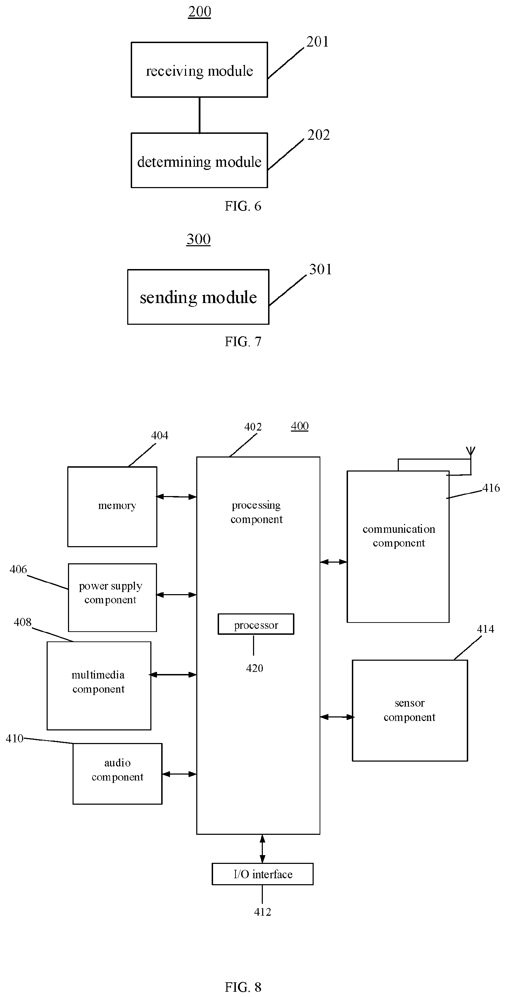

FIG. 6 is a flowchart illustrating an apparatus for determining a TCI state according to an exemplary embodiment. As shown in FIG. 6, the apparatus 200 is configured in a UE and includes: a receiving module 201, configured to receive first information sent by a network device; a determining module 202, configured to determine N TCI states based on the first information, in which N is a positive integer; the receiving module 201 being also configured to receive second information sent by the network device; the determining module 202 being also configured to determine M TCI states among the N TCI states based on the second information, in which M is a positive integer and M is less than or equal to N, and the M TCI states are used to indicate quasi-colocation information for the UE to receive a PDCCH.

In the present disclosure, through the second information, the at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the determining module 202 is also configured to: determine a TCI state among the N TCI states based on the second information in response to a CORESET associated with the PDCCH satisfying a first condition.

In the present disclosure, in a case that the CORESET satisfies the corresponding condition, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the first condition includes at least one of: the CORESET associated with the PDCCH being CORESET#0; or the CORESET associated with the PDCCH being a CORESET group corresponding to CORESET#0.

In the present disclosure, in a case that the CORESET is CORESET#0 or CORESET group corresponding to CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the first condition includes at least one of: the CORESET associated with the PDCCH being a first CORESET, the first CORESET being any CORESET other than CORESET#0, and the first CORESET being associated with any CSS set other than a type 3-PDCCH CSS set; or the CORESET associated with the PDCCH being a CORESET group corresponding to the first CORESET.

In the present disclosure, in a case that the CORESET is any CORESET other than CORESET#0 or a CORESET group corresponding to any CORESET other than CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CSS set other than the type 3-PDCCH CSS set includes at least one of: a type0-PDCCH CSS set; a type0A-PDCCH CSS set; a type0B-PDCCH CSS set; a type1-PDCCH CSS set; a type1A-PDCCH CSS set; a type2-PDCCH CSS set; or a type2A-PDCCH CSS set.

The present disclosure provides a variety of different CSS sets other than the type 3-PDCCH CSS set. In a case that the CORESET is any other CORESET other than CORESET#0 or the CORESET group corresponding to any other CORESET other than CORESET#0, the TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the determining module 202 is also configured to: determine at least one TCI state among the N TCI states based on the second information in response to a CORESET associated with the PDCCH satisfying a second condition.

In the present disclosure, in a case that the CORESET satisfies the corresponding condition, at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the second condition may include at least one of: the CORESET associated with the PDCCH being a second CORESET, the second CORESET being any CORESET other than CORESET#0, and the second CORESET being associated with a USS set and/or a type3-PDCCH CSS set; or the CORESET associated with the PDCCH being a CORESET group corresponding to the second CORESET.

In the present disclosure, by the second CORESET associated with the USS set and/or the type3-PDCCH CSS set or the CORESET group corresponding to the second CORESET, at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the quasi-colocation information for the reception of the PDCCH is determined based on more than one TCI state configuration in response to determining the more than one TCI state among the N TCI states based on the second information.

In the present disclosure, by determining the more than one TCI state from the multiple TCI states indicated by the first information, the quasi-colocation information of the USS set and/or the type3-PDCCH CSS set associated with the second CORESET is determined based on the multiple TCI state configurations, so as to receive the PDCCH and/or the PDCCH DMRS based on the quasi-colocation information.

In an embodiment, the first information is carried by a first MAC CE, the first MAC CE is used to indicate the N TCI states, and the N TCI states correspond to a code point of a TCI field in a DCI.

In the present disclosure, by indicating the N TCI states corresponding to one code point of the TCI field in the DCI through the MAC CE, it is realized that the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the first information is carried by a second MAC CE and a DCI, the second MAC CE is used to indicate TCI states respectively corresponding to a plurality of code points of a TCI field of the DCI, and the TCI field in the DCI is used to indicate one of the plurality of code points.

In the present disclosure, using the MAC CE and the DCI to indicate the multiple TCI states corresponding to one code point of the TCI field in the DCI, it is realized that the at least one TCI state is determined from the multiple TCI states indicated by the first information, so that the TCI state used by the UE to receive the PDCCH and/or PDCCH DMRS is determined in the case of multi-TRP. This improves flexibility for receiving the PDCCH and/or the PDCCH DMRS based on the unified TCI state.

In an embodiment, the second information is carried by an RRC signaling and/or a third MAC CE.

In the present disclosure, the second information is sent by the RRC signaling and/or the MAC CE, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the M TCI states are TCI states corresponding to a CORESET; or the M TCI states are TCI states corresponding to a CORESET group.

In the present disclosure, by determining the M TCI states corresponding to different CORESETs or CORESET groups, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the TCI state includes at least one of: a joint TCI state, the joint TCI state being used to indicate an uplink TCI state and a downlink TCI state; or a downlink TCI state.

In the present disclosure, through indicating the TCI states used for the PDCCH by the different TCI states, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

FIG. 7 is a flowchart illustrating an apparatus for determining a TCI state according to an exemplary embodiment. As shown in FIG. 7, the apparatus 300 is configured in a network device and includes: a sending module 301, configured to send first information to a user equipment (UE), the first information being used by the UE to determine N TCI states, in which N is a positive integer; the sending module 301 being also configured to send second information to the UE, the second information being used by the UE to determine M TCI states among the N TCI states, in which M is a positive integer and M is less than or equal to N, and the M TCI states are used to indicate quasi-colocation information for the UE to receive a PDCCH.

In the present disclosure, through the second information, the at least one TCI state is determined from the multiple TCI states indicated by the first information, it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the second information is used by the UE to determine a TCI state among the N TCI states in response to a CORESET associated with the PDCCH satisfying a first condition.

In the present disclosure, in a case that the CORESET satisfies the corresponding condition, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the first condition may include at least one of: the CORESET associated with PDCCH being CORESET#0; or the CORESET associated with the PDCCH being a CORESET group corresponding to CORESET#0.

In the present disclosure, in a case that the CORESET is CORESET#0 or the CORESET group corresponding to CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the first condition may include at least one of: the CORESET associated with the PDCCH being a first CORESET, the first CORESET being any CORESET other than CORESET#0, and the first CORESET being associated with any CSS set other than a type 3-PDCCH CSS set; or the CORESET associated with the PDCCH being a CORESET group corresponding to the first CORESET.

In the present disclosure, in a case that the CORESET is any CORESET other than CORESET#0 or the CORESET group corresponding to any CORESET other than CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CSS set other than the type 3-PDCCH CSS set includes at least one of: a type0-PDCCH CSS set; a type0A-PDCCH CSS set; a type0B-PDCCH CSS set; a type1-PDCCH CSS set; a type1A-PDCCH CSS set; a type2-PDCCH CSS set; or a type2A-PDCCH CSS set.

The present disclosure provides a variety of different CSS sets other than the type 3-PDCCH CSS set. In a case that the CORESET is any other CORESET other than CORESET#0 or the CORESET group corresponding to any other CORESET other than CORESET#0, one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the second information is used by the UE to determine at least one TCI state among the N TCI states, in response to a CORESET associated with the PDCCH satisfying a second condition.

In the present disclosure, in a case that the CORESET satisfies the corresponding condition, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the CORESET associated with the PDCCH satisfying the second condition may include at least one of: the CORESET associated with the PDCCH being a second CORESET, the second CORESET being any CORESET other than CORESET#0, and the second CORESET being associated with a USS set and/or a type3-PDCCH CSS set; or the CORESET associated with the PDCCH being a CORESET group corresponding to the second CORESET.

In the present disclosure, by the second CORESET associated with the USS set and/or the type3-PDCCH CSS set or the CORESET group corresponding to the second CORESET, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the quasi-colocation information for the reception of the PDCCH is determined based on more than one TCI state configuration in response to the second information being used by the UE to determine the more than one TCI state among the N TCI states.

In the present disclosure, by determining more than one TCI state from the multiple TCI states indicated by the first information, the quasi-colocation information of the USS set and/or the type3-PDCCH CSS set associated with the second CORESET is determined based on the multiple TCI state configurations, so as to receive the PDCCH and/or the PDCCH DMRS based on quasi-colocation information.

In an embodiment, the first information is carried by a first MAC CE, the first MAC CE is used to indicate the N TCI states, and the N TCI states correspond to a code point of a TCI field in a DCI.

In the present disclosure, through indicating the N TCI states for one code point of the TCI field in the DCI by the MAC CE, it is realized that the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the first information is carried by a second MAC CE and a DCI, the second MAC CE is used to indicate TCI states respectively corresponding to a plurality of code points of a TCI field of the DCI, and the TCI field in the DCI is used to indicate one of the plurality of code points.

In the present disclosure, using the MAC CE and the DCI to indicate the multiple TCI states corresponding to one code point of the TCI field in the DCI, it is realized that the at least one TCI state is determined from the multiple TCI states indicated by the first information, so that the TCI state used by the UE to receive the PDCCH and/or PDCCH DMRS is determined in the case of multi-TRP. This improves flexibility for receiving the PDCCH and/or the PDCCH DMRS based on the unified TCI state.

In an embodiment, the second information is carried by an RRC signaling and/or a third MAC CE.

In the present disclosure, the second information is sent by the RRC signaling and/or the MAC CE, the at least one TCI state is determined from the multiple TCI states indicated by the first information, and it is realized that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the M TCI states are TCI states corresponding to a CORESET; or the M TCI states are TCI states corresponding to a CORESET group.

In the present disclosure, by determining the M TCI states corresponding to different CORESETs or CORESET groups, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

In an embodiment, the TCI state includes at least one of: a joint TCI state, the joint TCI state being used to indicate an uplink TCI state and a downlink TCI state; or a downlink TCI state.

In the present disclosure, through indicating the TCI states used for the PDCCH by the different TCI states, it is realized that the at least one TCI state is determined from the multiple TCI states indicated by the first information, so that the TCI state used by the UE to receive the PDCCH and/or the PDCCH DMRS is determined in the case of multi-TRP. This improves flexibility for receiving the PDCCH and/or the PDCCH DMRS based on the unified TCI state.

It should be noted that the modules/units involved in the apparatus 300 to which this embodiments of the present disclosure relate are illustrative only and are not limited. For example, the apparatus 300 in the embodiments of the present disclosure may also include a receiving module and/or a processing module. The modules included in the apparatus 300 may interact with each other and with other network element devices.

With respect to the apparatus 200 and the apparatus 300 in the above embodiments, the specific manner in which each module performs an operation has been described in detail in the embodiments of the method and will not be elaborated here.

FIG. 8 is a flowchart illustrating a device for determining a transmission configuration indication (TCI) state according to an exemplary embodiment. For example, the device 400 may be a mobile phone, a computer, a digital broadcast terminal, a messaging device, a game console, a tablet device, a medical device, a fitness device, a personal digital assistant, etc.

Referring to FIG. 8, the device 400 may include one or more of: a processing component 402, a memory 404, a power supply component 406, a multimedia component 408, an audio component 410, an input/output (I/O) interface 412, and a sensor component 414, and a communication component 416.

The processing component 402 generally controls the overall operations of the device 400, such as operations associated with display, phone calls, data communications, camera operations, and recording operations. The processing component 402 may include one or more processors 420 to execute instructions to complete all or part of the steps of the above method. Additionally, the processing component 402 may include one or more modules that facilitate interaction between processing component 402 and other components. For example, the processing component 402 may include a multimedia module to facilitate interaction between the multimedia component 408 and the processing component 402.

The memory 404 is configured to store various types of data to support operations at the device 400. Examples of such data include instructions for any application or method operating on the device 400, contact data, phonebook data, messages, pictures, videos, etc. The memory 404 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 406 provides power to various components of the device 400. The power supply component 406 may include a power management system, one or more power supplies, and other components associated with generating, managing, and distributing power to the device 400.

The multimedia component 408 includes a screen that provides an output interface between the device 400 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 408 includes a front-facing camera and/or a rear-facing camera. When the device 400 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 410 is configured to output and/or input an audio signal. For example, the audio component 410 includes a microphone (MIC) configured to receive the external audio signal when the device 400 is in an operating mode, such as a call mode, a recording mode, and a speech recognition mode. The received audio signal may be further stored in the memory 404 or sent via the communication component 416. In some embodiments, the audio component 410 also includes a speaker for outputting audio signals.

The I/O interface 412 provides an interface between the processing component 402 and a peripheral interface module. The peripheral interface module may be a keyboard, a click wheel, a button, etc. These button may include, but is not limited to: a home button, a volume button, a start button, and a lock button.

The sensor component 414 includes one or more sensors that provide various aspects of status assessment for the device 400. For example, the sensor component 414 may detect the open/closed state of the device 400, the relative positioning of components, such as a display and a keypad of the device 400, the sensor component 414 may also detect a position change of the device 400 or a component of the device 400, presence or absence of user contact with the device 400, an orientation or an acceleration/deceleration of the device 400, and a temperature change of the device 400. The sensor component 414 may include a proximity sensor configured to detect presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as WiFi, 2G, or 3G, or their combination. In an exemplary embodiment, the communication component 416 receives a broadcast signal or broadcast related information from an external broadcast management system via a broadcast channel. In an exemplary embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 400 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, a non-temporary computer-readable storage medium including instructions is also provided, such as the memory 404 including instructions that may be executed by a processor 420 of the device 400 to accomplish the method described above. For example, the non-temporary computer readable storage media may be ROM, random access memory (RAM), CD-ROM, magnetic tape, floppy disk, and optical data storage device.

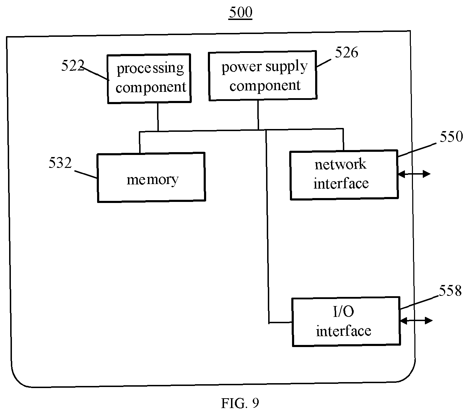

FIG. 9 is a flowchart illustrating a device for determining a TCI state according to an exemplary embodiment. For example, the device 500 may be provided as a base station or a server. Referring to FIG. 9, the device 500 includes a processing component 522, which further includes at least one processor, and a memory resource represented by a memory 532 for storing instructions executable by the processing component 522, such as an application. The application stored in the memory 532 may include one or more modules, each of which corresponds to a set of instructions. In addition, the processing component 522 is configured to execute instructions to perform any method of the aforementioned methods performed by the network device.

The device 500 may further include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™} or the like.

In an embodiment, such as that shown in FIG. 1, the present disclosure also provides a communication system including a UE and a network device. The UE is used to perform any one of the method for determining a TCI states described in FIGS. 2 to 4; and the network device is used to perform any one of the method for determining a TCI states described in FIG. 5.

The present disclosure provides that in a case of a unified TCI state indication for multi-TRP, when the first information indicates multiple TCI states, the second information is provided for the PDCCH, and is used to indicate part of or all of the TCI states indicated by the first information for the PDCCH, thereby improving flexibility for receiving the PDCCH based on the unified TCI state.

The present disclosure determines the number of TCI states corresponding to various CORESET types in a unified TCI state terminal with multi-TRP to improve the multi-TRP transmission performance and reduce terminal complexity.

It is further understood that "multiple" in the present disclosure means two or more, and other quantifiers are similar. "And/or" describes the association relationship of the associated object, indicating that there may be three kinds of relationships, for example, A and/or B, may be: A exists alone, A and B exist simultaneously, and B exists alone. The character "/" generally indicates that the associated object is an "or" relationship. The singular forms of "a", "said" and "that" are also intended to include the majority form, unless the context clearly indicates otherwise.

It is further understood that the terms "first", "second", etc. are used to describe various types of information, but that information should not be limited to these terms. These terms are used only to distinguish the same type of information from one to another and do not indicate a particular order or degree of importance. In fact, expressions such as "first" and "second" are used interchangeably. For example, without leaving the scope of the present disclosure, the first information may also be referred to as the second information, and similarly, the second information may also be referred to as the first information.

It is further understood that the meaning of the words "in response to" and "if" as referred to in the present disclosure depends on the context and the actual situation in which they are used, such as the words "in response to" as used herein can be interpreted as "when" or "in a case that" or "if".

It is further understood that in the embodiments of the present disclosure, although the operations are described in a particular order in the attached drawings, it should not be construed as requiring that the operations be performed in a particular or serial order as shown, or that the operations shown be performed in their entirety to obtain the desired result. In certain environments, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a transmission configuration indication (TCI) state, performed by a user equipment (UE), comprising:
receiving first information sent by a network device, and determining N TCI states based on the first information, wherein N is a positive integer;
receiving second information sent by the network device, and determining M TCI states among the N TCI states based on the second information, wherein M is a positive integer and M is less than or equal to N, and the M TCI states are used to indicate quasi-colocation information for the UE to receive a physical downlink control channel (PDCCH).

2. The method according to claim 1, wherein determining the M TCI states among the N TCI states based on the second information comprises:
determining a TCI state among the N TCI states based on the second information in response to a control resource set (CORESET) associated with the PDCCH satisfying a first condition.

3. The method according to claim 2, wherein the CORESET associated with the PDCCH satisfying the first condition comprises at least one of:
the CORESET associated with the PDCCH being CORESET#0; or
the CORESET associated with the PDCCH being a CORESET group corresponding to CORESET#0.

4. The method according to claim 2, wherein the CORESET associated with the PDCCH satisfying the first condition comprises at least one of:
the CORESET associated with the PDCCH being a first CORESET, the first CORESET being any CORESET other than CORESET#0, and the first CORESET being associated with any common search space (CSS) set other than a type 3-PDCCH CSS set; or
the CORESET associated with the PDCCH being a CORESET group corresponding to the first CORESET.

5. The method according to claim 4, wherein the CSS set other than the type 3-PDCCH CSS set comprises at least one of:
a type0-PDCCH CSS set;
a type0A-PDCCH CSS set;
a type0B-PDCCH CSS set;
a type1-PDCCH CSS set;
a type1A-PDCCH CSS set;
a type2-PDCCH CSS set; or
a type2A-PDCCH CSS set.

6. The method according to claim 1, wherein determining the M TCI states among the N TCI states based on the second information comprises:
determining at least one TCI state among the N TCI states based on the second information in response to a CORESET associated with the PDCCH satisfying a second condition.

7. The method according to claim 6, wherein the CORESET associated with the PDCCH satisfying the second condition comprises at least one of:
the CORESET associated with the PDCCH being a second CORESET, the second CORESET being any CORESET other than CORESET#0, and the second CORESET being associated with a UE-specific search space (USS) set and/or a type 3-PDCCH CSS set; or
the CORESET associated with the PDCCH being a CORESET group corresponding to the second CORESET.

8. The method according to claim 6 or 7, wherein the quasi-colocation information for the reception of the PDCCH is determined based on more than one TCI state configuration in response to determining the more than one TCI state among the N TCI states based on the second information.

9. The method according to any one of claims 1-8, wherein the first information is carried by a first medium access control control element (MAC CE), the first MAC CE is used to indicate the N TCI states, and the N TCI states correspond to a code point of a TCI field in downlink control information (DCI).

10. The method according to any one of claims 1-8, wherein the first information is carried by a second MAC CE and a DCI, the second MAC CE is used to indicate TCI states respectively corresponding to a plurality of code points of a TCI field of the DCI, and the TCI field in the DCI is used to indicate one of the plurality of code points.

11. The method according to any one of claims 1-10, wherein the second information is carried by a radio resource control (RRC) signaling and/or a third MAC CE.

12. The method according to any one of claims 1-11, wherein
the M TCI states are TCI states corresponding to a CORESET; or,
the M TCI states are TCI states corresponding to a CORESET group.

13. The method according to any one of claims 1-12, wherein the TCI state comprises at least one of:
a joint TCI state, the joint TCI state being used to indicate an uplink TCI state and a downlink TCI state; or
a downlink TCI state.

14. A method for determining a transmission configuration indication (TCI) state, performed by a network device, comprising:
sending first information to a user equipment (UE), the first information being used by the UE to determine N TCI states, wherein N is a positive integer;
sending second information to the UE, the second information being used by the UE to determine M TCI states among the N TCI states, wherein M is a positive integer and M is less than or equal to N, and the M TCI states are used to indicate quasi-colocation information for the UE to receive a physical downlink control channel (PDCCH).

15. The method according to claim 14, wherein the second information is used by the UE to determine a TCI state among the N TCI states in response to a control resource set (CORESET) associated with the PDCCH satisfying a first condition.

16. The method according to claim 15, wherein the CORESET associated with the PDCCH satisfying the first condition comprises at least one of:
the CORESET associated with the PDCCH being CORESET#0; or
the CORESET associated with the PDCCH being a CORESET group corresponding to CORESET#0.

17. The method according to claim 15, wherein the CORESET associated with the PDCCH satisfying the first condition comprises at least one of:
the CORESET associated with the PDCCH being a first CORESET, the first CORESET being any CORESET other than CORESET#0, and the first CORESET being associated with any common search space (CSS) set other than a type 3-PDCCH CSS set; or
the CORESET associated with the PDCCH being a CORESET group corresponding to the first CORESET.

18. The method according to claim 17, wherein the CSS set other than type 3-PDCCH CSS set comprises at least one of:
a type0-PDCCH CSS set;
a type0A-PDCCH CSS set;
a type0B-PDCCH CSS set;
a type1-PDCCH CSS set;
a type1A-PDCCH CSS set;
a type2-PDCCH CSS set; or
a type2A-PDCCH CSS set.

19. The method according to claim 14, wherein the second information is used by the UE to determine at least one TCI state among the N TCI states, in response to a CORESET associated with the PDCCH satisfying a second condition.

20. The method according to claim 19, wherein the CORESET associated with the PDCCH satisfying the second condition comprises at least one of:
the CORESET associated with the PDCCH being a second CORESET, the second CORESET being any CORESET other than CORESET#0, and the second CORESET being associated with a UE-specific search space (USS) set and/or a type 3-PDCCH CSS set; or
the CORESET associated with the PDCCH being a CORESET group corresponding to the second CORESET.

21. The method according to claim 19 or 20, wherein the quasi-colocation information for the reception of the PDCCH is determined based on more than one TCI state configuration, in response to the second information being used by the UE to determine the more than one TCI state among the N TCI states.

22. The method according to any one of claims 14-21, wherein the first information is carried by a first medium access control control element (MAC CE), the first MAC CE is used to indicate the N TCI states, and the N TCI states correspond to a code point of a TCI field in downlink control information (DCI).

23. The method according to any one of claims 14-21, wherein the first information is carried by a second MAC CE and a DCI, the second MAC CE is used to indicate TCI states respectively corresponding to a plurality of code points of a TCI field in the DCI, and the TCI field in the DCI is used to indicate one of the plurality of code points.

24. The method according to any one of claims 14-23, wherein the second information is carried by a radio resource control (RRC) signaling and/or a third MAC CE.

25. The method according to any one of claims 14-24, wherein
the M TCI states are TCI states corresponding to a CORESET; or,
the M TCI states are TCI states corresponding to a CORESET group.

26. The method according to any one of claims 14-25, wherein the TCI state comprises at least one of:
a joint TCI state, the joint TCI state being used to indicate an uplink TCI state and a downlink TCI state; or
a downlink TCI state.

27. An apparatus for determining a transmission configuration indication (TCI) state, applied to a user equipment (UE), comprising:
a receiving module, configured to receive first information sent by a network device;
a determining module, configured to determine N TCI states based on the first information, wherein N is a positive integer;
the receiving module being also configured to receive second information sent by the network device;
the determining module also configured to determine M TCI states among the N TCI states based on the second information, wherein M is a positive integer and M is less than or equal to N, and the M TCI states are used to indicate quasi-colocation information for the UE to receive a physical downlink control channel (PDCCH).

28. An apparatus for determining a transmission configuration indication TCI state, applied to a network device, comprising:
a sending module, configured to send first information to a user equipment (UE), the first information being used by the UE to determine N TCI states, wherein N is a positive integer;
the sending module also configured to send second information to the UE, the second information being used by the UE to determine M TCI states among the N TCI states, wherein M is a positive integer and M is less than or equal to N, and the M TCI states are used to indicate quasi-colocation information for the UE to receive a physical downlink control channel (PDCCH).

29. A device for determining a transmission configuration indication, TCI, state, comprising:
a processor;
a memory for storing instructions executable by the processor;
wherein the processor is configured to perform the method according to any one of claims 1 to 13.

30. A device for determining a transmission configuration indication, TCI, state, comprising:
a processor;
a memory for storing instructions executable by the processor;
wherein the processor is configured to perform the method according to any one of claims 14 to 26.

31. A communication system, comprising a user equipment, UE, and a network device, wherein
the UE is configured to perform the method according to any one of claims 1 to 13;
the network device is configured to perform the method according to any one of claims 14 to 26.

32. A storage medium having stored thereon instructions, wherein when the instructions are executed by a processor of a user equipment (UE), the UE is enabled to perform the method according to any one of claims 1 to 13.

33. A storage medium having stored thereon instructions, wherein when the instructions are executed by a processor of a network device, the network device is enabled to perform the method according to any one of claims 14 to 26.
